(19) Europäisches Patentamt / European Patent Office / Office européen des brevets

(11) **EP 3 116 734 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(21) Anmeldenummer: **15707042.6**

(22) Anmeldetag: **21.02.2015**

(51) Int Cl.:
***B60K 7/00*** *(2006.01)*

(86) Internationale Anmeldenummer:
**PCT/EP2015/000395**

(87) Internationale Veröffentlichungsnummer:
**WO 2015/135627 (17.09.2015 Gazette 2015/37)**

(54) **VERFAHREN ZUR ANSTEUERUNG VON E-MOTOREN BEI SERIELLEN HYBRIDFAHRZEUGEN ODER VOLLELEKTRISCHEN FAHRZEUGEN MIT MINDESTENS ZWEI SEPARAT ANGETRIEBENEN ACHSEN**

METHOD FOR ACTUATING ELECTRIC MOTORS IN SERIAL HYBRID VEHICLES OR FULLY ELECTRIC VEHICLES HAVING AT LEAST TWO SEPARATELY DRIVEN AXLES

PROCÉDÉ DE COMMANDE DE MOTEURS ÉLECTRIQUES SUR DES VÉHICULES HYBRIDES À CONFIGURATION EN SÉRIE OU DES VÉHICULES TOUT ÉLECTRIQUES ÉQUIPÉS D'AU MOINS DEUX ESSIEUX ENTRAÎNÉS SÉPARÉMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2014 DE 102014003437**
**08.01.2015 DE 102015000216**

(43) Veröffentlichungstag der Anmeldung:
**18.01.2017 Patentblatt 2017/03**

(73) Patentinhaber: **WABCO GmbH**
**30453 Hannover (DE)**

(72) Erfinder:
• **FLAUM, Nikolai**
**30457 Hannover (DE)**
• **WALLBAUM, Torsten**
**31089 Duingen (DE)**

(74) Vertreter: **Lauerwald, Jörg**
**Wabco GmbH**
**Am Lindener Hafen 21**
**30453 Hannover (DE)**

(56) Entgegenhaltungen:
WO-A1-2012/111160     DE-A1-102010 036 859
US-A1- 2013 313 033     US-A1- 2014 018 987

**Beschreibung**

Die Erfindung betrifft ein Verfahren zum Steuern eines Fahrzeuges gemäß dem unabhängigen Anspruch 1, eine Vorrichtung zum Steuern eines Fahrzeuges gemäß Anspruch 15 und ein Fahrzeug gemäß Anspruch 16.

Bei Fahrzeugen mit mehreren Antriebsachsen, insbesondere bei seriell angetriebenen Hybridfahrzeugen oder vollelektrisch angetriebenen Fahrzeugen, ist es erforderlich, einerseits eine verbrauchsoptimale und andererseits eine beschleunigungsoptimale Betriebs- oder Fahrstrategie für das Fahrzeug, insbesondere beim Beschleunigen und Bremsen des Fahrzeuges, bereitzustellen. Hierdurch wäre ein optimierter Energiebedarf und eine optimierte Traktion bei einer langen Lebensdauer des Fahrzeuges und dessen Reifen gewährleistet.

Es besteht deshalb ein Bedarf an einem Verfahren zum Betreiben eines Fahrzeuges, mit dem es ermöglicht ist, das Fahrzeug effizient, verbrauchs- und beschleunigungsoptimal zu betreiben.

Insbesondere ist es wünschenswert ein Verfahren und eine Vorrichtung bereitzustellen, mit denen es ermöglicht ist, ein(e) vorgegebene(s) Antriebskraft oder Antriebsmoment, insbesondere ein vorgegebenes Drehmoment, auf die mehreren Antriebsräder bzw. Antriebsachsen zu verteilen, so dass eine optimale Kraftübertragung vom Fahrzeug auf den Untergrund (Fahrbahn) gewährleistet ist. Aus dem Stand der Technik sind hierfür verschiedene Verfahren zum Steuern von Fahrzeugen bekannt.

Aus dem Dokument DE 10 2011 001 994 A1 ist ein Verfahren zum Betreiben eines Hybridfahrzeuges mit mehreren angetriebenen Achsen bekannt. Das bekannte Fahrzeug umfasst eine erste Antriebsachse, die elektrisch von einem ersten elektrischen Motor angetrieben wird und eine zweite Antriebsachse, die elektrisch von einem zweiten elektrischen Motor und/oder einem Verbrennungsmotor angetrieben wird. Bei dem bekannten Verfahren werden während eines Fahrzyklus des Fahrzeuges die Fahrleistung und/oder eine die Fahrleistung repräsentierende Größe des Fahrzeuges ermittelt. Aus dieser Größe wird dann für den nächsten, neuen Fahrzyklus des Fahrzeuges eine Betriebsstrategie auf Grundlage der Fahrleistung oder der die Fahrleistung repräsentierenden Größe des vorangehenden Fahrzyklus bestimmt.

Das Dokument DE 100 49 567 A1 beschreibt ein Steuergerät zum Steuern eines allradgetriebenen Kraftfahrzeuges. Das bekannte Kraftfahrzeug umfasst eine erste Antriebsquelle zum Antreiben eines ersten Paares von Vorderrädern und eines Paares von Hinterrädern sowie eine zweite Antriebsquelle zum Antreiben eines anderen Paares von Vorder- und Hinterrädern. Mit dem bekannten Verfahren bzw. bekannten Fahrzeugsteuergerät ist es möglich eine Frontantriebskraft für den Antrieb der Vorderräder und eine Heckantriebskraft für den Antrieb der Hinterräder bereitzustellen.

Auch die Druckschrift DE 100 49 514 B4 beschreibt eine Fahrzeugregelvorrichtung zum Steuern eines Hybridfahrzeuges. Das Hybridfahrzeug umfasst eine erste Antriebsquelle und eine zweite Antriebsquelle sowie ein Kraftübertragungssystem mit einem Getriebe und einem Planetengetriebe.

Das Dokument DE 196 02 170 A1 betrifft ein Verfahren zur Bestimmung von Fahrwegbedingungen mittels eines Bremsdruckregelverfahrens. Auch das Dokument EP 2 432 670 B1 betrifft ein Verfahren zum Steuern eines Bremssystems eines Fahrzeuges, wobei das Fahrzeug einen Motor, eine Betriebsbremse und eine Dauerbremse aufweist. Die beiden voran genannten Dokumente beschreiben jeweils beispielhaft ein Verfahren zur Ermittlung eines Schlupfs für ein Fahrzeug.

Die US2014/0018987A offenbart ein Fahrzeug mit Einzelradantrieben. Für jedes Rad werden Drehmoment und Schlupf erfasst, wobei die Drehmomentverteilung dann zwischen den Rädern derart erfolgt, dass ein gewünschtes Gesamtmoment erreicht und gleichzeitig die Effizienz verbessert wird.

Die US2013/03130033A beschreibt eine Schlupfregelung für Raupen- oder Kettenfahrzeuge.

Die DE102010036859A1 beschreibt ein Verfahren und eine Vorrichtung zur Regelung einer Drehmomentenverteilung einer Allradkupplung für ein zumindest wahlweise vierradangetriebenes Kraftfahrzeug, wobei unter anderem der Schlupf und die Längskraft für die Regelung des Drehmoments der Allradkupplung verwendet wird.

Aufgabe der Erfindung ist es, ein verbessertes Verfahren und eine verbesserte Vorrichtung zum Steuern eines Fahrzeuges zur Verfügung zu stellen, die es erlauben ein Gesamtdrehmoment auf mehrere Antriebsachsen zu verteilen, so dass der Schlupf des Fahrzeuges, insbesondere der Differenzschlupf, minimiert wird.

Diese Aufgabe wird erfindungsgemäß durch das Verfahren nach Anspruch 1, die Vorrichtung nach Anspruch 15 und das Fahrzeug nach Anspruch 16 gelöst. Die Unteransprüche beschreiben bevorzugte Ausgestaltungsformen der Erfindung.

Die Erfindung umfasst den Gedanken eines Verfahrens zum Steuern eines Fahrzeuges mit mindestens einer ersten und einer zweiten Antriebsachse, wobei der ersten Antriebsachse eine erste Antriebsvorrichtung und der zweiten Antriebsachse eine zweite Antriebsvorrichtung zugeordnet ist und beim Betrieb der ersten und zweiten Antriebsvorrichtung ein erster und zweiter Schlupf, bei einer auf die erste und zweite Antriebsachse wirkenden ersten und zweiten Antriebskraft, vorliegen, wobei das Verfahren folgende Schritte umfasst:

- Erfassen der ersten und zweiten Antriebskraft für die erste und zweite Antriebsachse des Fahrzeuges;
- Erfassen des ersten und zweiten Schlupfwertes für die erste und zweite Antriebsachse des Fahrzeuges;
- Ermitteln einer ersten Schlupfmaßzahl für die erste Antriebsachse aus der ersten Antriebskraft und dem ersten Schlupfwert und einer zweiten Schlupfmaßzahl für die zweite Antriebsachse aus der zweiten Antriebskraft und dem zweiten Schlupfwert;

- Vorgeben eines Gesamtmomentes, das insgesamt auf die erste und zweite Antriebsachse wirken soll; und
- Aufteilen des Gesamtmomentes in ein erstes und zweites Sollmoment in Abhängigkeit von der ersten und zweiten Schlupfmaßzahl.

Weiterhin umfasst die Erfindung den Gedanken einer Vorrichtung zum Steuern eines Fahrzeuges, insbesondere ausgebildet das erfindungsgemäße Verfahren auszuführen, mit mindestens einer ersten und einer zweiten Antriebsachse, wobei der ersten Antriebsachse eine erste Antriebsvorrichtung und der zweiten Antriebsachse eine zweite Antriebsvorrichtung zugeordnet ist und beim Betrieb der ersten und zweiten Antriebsvorrichtung ein erster und zweiter Schlupf, bei einer auf die erste und zweite Antriebsachse wirkenden ersten und zweiten Antriebskraft, vorliegen, wobei die Vorrichtung folgende Merkmal aufweist:

- Mittel zum Erfassen der ersten und zweiten Antriebskraft für die erste und zweite Antriebsachse des Fahrzeuges;
- Mittel zum Erfassen des ersten und zweiten Schlupfwertes für die erste und zweite Antriebsachse des Fahrzeuges;
- Auswertemodul zum Ermitteln einer ersten Schlupfmaßzahl für die erste Antriebsachse aus der ersten Antriebskraft und dem ersten Schlupfwert und einer zweiten Schlupfmaßzahl für die zweite Antriebsachse aus der zweiten Antriebskraft und dem zweiten Schlupfwert;
- Mittel zum Vorgeben eines Gesamtmomentes, das insgesamt auf die erste und zweite Antriebsachse wirken soll; und
- Steuermodul zum Aufteilen des Gesamtmomentes in ein erstes und zweites Sollmoment in Abhängigkeit von der ersten und zweiten Schlupfmaßzahl.

Darüber hinaus umfasst die Erfindung ein Fahrzeug enthaltend eine erfindungsgemäße Vorrichtung.

Im Folgenden wird das Konzept der Erfindung beispielhaft - ohne dabei einschränkend zu sein - beschrieben. Das erfindungsgemäße Verfahren und die erfindungsgemäße Vorrichtung dienen zum Steuern eines Fahrzeuges mit zwei Antriebsachsen, insbesondere eines seriell angetriebenen Hybridfahrzeuges, beispielsweise eines Omnibusses. Gemäß dem Konzept der Erfindung werden zunächst eine erste und zweite Antriebskraft und ein erster und zweite Schlupfwert für die erste und zweite Antriebsachse des Fahrzeuges erfasst. Der Schlupfwert beschreibt dabei die Abweichung von tatsächlich zurück gelegter Strecke des Fahrzeuges pro Radumdrehung und Radumfang eines Rades des Fahrzeuges. Schlupf entsteht insbesondere aufgrund eines Durchdrehens oder Blockierens der Räder beim Fahren mit dem Fahrzeug, insbesondere beim Beschleunigen oder Bremsen. Die Antriebskraft gibt die Kraft an, die auf eine Antriebsachse wirkt. Aus den Werten für die Antriebskräfte und den Schlupfwerten wird anschließend eine erste und zweite Schlupfmaßzahl für die erste und zweite Antriebsachse ermittelt. Die Schlupfmaßzahl ist definiert als die Änderung des Schlupfes ($d\lambda$) bezogen auf die Änderung der Antriebskraft ($dF$) und kann gemäß der folgenden Formel berechnet werden:

$$FK_n = f\left(\frac{d\lambda}{dF}\right).$$

Aus der ermittelten ersten und zweiten Schlupfmaßzahl wird dann beispielsweise ein Verhältnis, insbesondere ein erster und zweiter Verhältniswert, ermittelt. Weiter wird ein Gesamtmoment für das Fahrzeug vorgegeben, zum Beispiel mittels Betätigen eines Bremswertgebers oder eines Gaspedals durch einen Fahrer des Fahrzeuges. Das Gesamtmoment gibt hierbei das Moment an, welches insgesamt auf die (alle) Antriebsachsen, insbesondere auf die erste und zweite Antriebsachse wirken soll. Das Gesamtmoment wird anschließend in ein erstes und zweites Sollmoment aufgeteilt, beispielsweise gemäß dem ermittelten Verhältnis, insbesondere gemäß dem ersten und zweiten Verhältniswert. Das erste und zweite Sollmoment wird dann an die erste und zweite Antriebsachse angelegt bzw. sollen auf diese wirken.

Mit dem erfindungsgemäßen Verfahren und der erfindungsgemäßen Vorrichtung zum Steuern eines Fahrzeuges, insbesondere durch die schlupfgeregelte Ansteuerung der Antriebsachsen bzw. Antriebsvorrichtungen des Fahrzeuges, wird die Fahrzeugstabilität des Fahrzeuges beim Fahrbetrieb verbessert und der Verschleiß der Reifen der Antriebsachsen minimiert und/oder gleichmäßig auf die Antriebsachsen verteilt. Darüber hinaus wird mit dem erfindungsgemäßen Verfahren beim Beschleunigen und/oder Verzögern des Fahrzeuges eine verbesserte Traktion bereitgestellt. Zusätzlich ist beim Bremsen des Fahrzeuges der Grad der Rekuperation erhöht.

Die Antriebskraft eines Fahrzeuges lässt sich beispielsweise über die Änderung der Fahrzeuggeschwindigkeit bestimmen, wobei die Fahrzeuggeschwindigkeit beispielsweise über eine Erfassung der Raddrehzahl eines Rades des Fahrzeuges der angetriebenen und/oder der nicht angetriebenen Achsen bestimmt werden kann. Auch kann die Fahrzeuggeschwindigkeit mittels eines Global Positioning System (GPs)-Signals erfasst werden. Das Erfassen der Fahrzeuggeschwindigkeiten kann bevorzugt achsen-, seiten- und/oder radweise erfolgen.

Diese und weitere bevorzugte Ausgestaltungsformen der Erfindung sind Gegenstand der Unteransprüche und präzisieren sowohl das Verfahren als auch die Vorrichtung zum Steuern eines Fahrzeuges. Insbesondere sind bevorzugte Weiterbildungen Gegenstand der Unteransprüche und geben im Einzelnen vorteilhafte Möglichkeiten an, wie das/die oben beschriebene Verfahren/Vorrichtung im Rahmen der Aufgabenstellung sowie hinsichtlich weiterer Vorteile zu realisieren beziehungsweise auszugestalten ist.

Bevorzugt sieht eine Ausgestaltung vor, dass das Verfahren zusätzlich folgende Schritte umfasst, nämlich ein Ermitteln eines Verhältniswertes aus der ersten und zweiten Schlupfmaßzahl für die erste und zweite Antriebsachse; und ein Aufteilen des Gesamtmomentes in das erste und das zweite Sollmoment in Abhängigkeit von dem ermittelten Verhältniswert. Hierbei ist es bevorzugt vorgesehen, dass aus der ermittelten ersten und zweiten Schlupfmaßzahl für die erste und zweite Antriebsachse ein Verhältnis beziehungsweise ein erster und zweiter Verhältniswert für die erste und zweite Antriebsachse ermittelt wird. Anschließend wird das Gesamtmoment gemäß dem Verhältnis, insbesondere gemäß einem ersten und zweiten Verhältniswert, in das erste und zweite Sollmoment aufgeteilt.

Bei einer zweckmäßigen Ausgestaltung kann es vorgesehen sein, dass das Verfahren zusätzlich folgende Schritte umfasst, nämlich ein Vorgeben eines Halbmessers mindestens eines Rades des Fahrzeuges; Vorgeben eines ersten und zweiten Grenzschlupfes für die erste und zweite Antriebsachse; und Ermitteln eines ersten Grenzmomentes für die erste Antriebsachse und eines zweiten Grenzmomentes für die zweite Antriebsachse mittels der ersten und zweiten Schlupfmaßzahl, dem ersten und zweiten Grenzschlupf und dem mindestens einen Halbmesser des Rades. Bei dieser Ausgestaltung ist es vorgesehen, dass einerseits ein Halbmesser oder Radius mindestens eines Rades des Fahrzeuges und andererseits ein erster und zweiter Grenzschlupf für die erste und zweite Antriebsachse vorgeben werden. Aus diesen Werten von Halbmesser oder Radius und dem Grenzschlupf wird dann ein erstes Grenzmoment für die erste Antriebsachse und ein zweites Grenzmoment für die zweite Antriebsachse bestimmt. Der Halbmesser oder Radius der Räder oder Reifen des Fahrzeuges ist u. a. abhängig vom Luftdruck in den Reifen, der Geschwindigkeit des Fahrzeuges und/oder dem Abnutzungsgrad der Reifen. Der aktuelle Wert für den Halbmesser eines jeden Reifens des Fahrzeuges wird ständig ermittelt und kann zur Berechnung des Grenzmomentes für die jeweiligen Antriebsachsen herangezogen werden.

Eine bevorzugte Weiterbildung sieht vor, dass das Verfahren zusätzlich folgenden Schritt umfasst, nämlich ein Ansteuern der ersten und zweiten Antriebsvorrichtung, so dass das erste Sollmoment auf die erste Antriebsachse und das zweite Sollmoment auf die zweite Antriebsachse wirkt, wobei das erste Sollmoment nicht größer als das erste Grenzmoment und das zweite Sollmoment nicht größer als das zweite Grenzmoment für die jeweils erste oder zweite Antriebsachse ist. Hierbei ist es bevorzugt vorgesehen, dass die zuvor ermittelten Grenzmomente als Kontrollwerte beim Ansteuern der jeweiligen Antriebsvorrichtungen für die jeweilige Antriebsachse dienen, wobei die Antriebsachsen mit den jeweiligen Sollmomenten beaufschlagt werden, derart, dass die Sollmomente immer kleiner als die jeweils zugehörigen ermittelten Grenzmomente sind, insbesondere ist das erste Sollmoment, das auf die erste Antriebsachse wirkt, kleiner als das erste Grenzmoment und das zweite Sollmoment, das auf die zweite Antriebsachse wirkt, kleiner als das zweite Grenzmoment. Hierbei ist es also vorgesehen, dass die Sollmomente ständig mit den Grenzmomenten verglichen werden. Sobald ein Sollmoment das entsprechende Grenzmoment erreicht oder überschritten hat, wird das Sollmoment verringert, so dass das resultierende (Soll-)Moment wieder in den gewünschten Bereich gelangt. Hierdurch ist stets gewährleistet, dass ein bestimmter (vorgegebener) Grenzschlupf an der ersten und/oder zweiten Antriebsachse nicht überschritten wird.

Bei einer vorteilhaften Ausgestaltung kann es vorgesehen sein, dass die erste Antriebsvorrichtung als eine auf die erste Achse wirkende erste Achsenantriebsvorrichtung oder als zwei erste unabhängig voneinander auf die Räder der ersten Achse wirkenden Radantriebsvorrichtungen und die zweite Antriebsvorrichtung als eine auf die zweite Achse wirkende zweite Achsenantriebsvorrichtung oder als zwei zweite unabhängige voneinander auf die Räder der zweiten Achse wirkenden Radantriebsvorrichtungen gebildet sind. Bei dieser Ausgestaltung sind entweder zwei Achsenantriebsvorrichtungen für jeweils eine Antriebsachse oder insgesamt vier Radantriebsvorrichtungen für jedes Rad einer Antriebsachse, insbesondere der ersten und zweiten Antriebsachse, vorgesehen.

Eine bevorzugte Weiterbildung sieht vor, dass die erste und/oder zweite Achsenantriebsvorrichtung und/oder die ersten und zweiten Radantriebsvorrichtungen als ein erster und/oder zweiter Elektromotor gebildet sind.

Eine Weiterbildung kann vorsehen, dass die erste und/oder zweite Antriebsvorrichtung sowohl Beschleunigungsmomente als auch Verzögerungsmomente auf die erste und/oder zweite Antriebsachse bewirken. Hierbei ist es in vorteilhafter Weise vorgesehen, dass das Verfahren nicht nur beim Beschleunigen, sondern auch beim Bremsen eines Fahrzeuges ausgeführt werden kann. Insbesondere beim Bremsen des Fahrzeuges kann die Bewegungsenergie wieder als elektrische Energie zurückgewonnen werden, wobei dann die Antriebsvorrichtungen, insbesondere die Elektromotoren, als Generatoren betrieben werden.

Bevorzugt sieht eine Ausgestaltung vor, dass das Fahrzeug vorzugsweise eine elektronisch geregelte Luftfederung zur Erfassung einer Achslastverteilung, insbesondere eines ersten und zweiten Achslastwertes für die erste und zweite Antriebsachse, umfasst. Hierbei ist es bevorzugt vorgesehen, mittels einer elektronisch geregelten Luftfederanlage die Achslastverteilung des Fahrzeuges zu ermitteln, insbesondere einen ersten und zweiten Achslastwert für die erste und zweite Antriebsachse. Aus diesen Werten kann dann ein Verhältnis oder ein Verhältniswert für die Aufteilung des Gesamtmomentes in die entsprechenden Sollmomente, die jeweils an den jeweiligen Antriebsachsen angelegt werden sollen, ermittelt werden, insbesondere für die erste und zweite Antriebsachse. Dies hat den Vorteil, dass schon vor Fahrantritt mit dem Fahrzeug eine optimierte Momentverteilung vorliegt, so dass bereits beim Anfahren mit dem Fahrzeug eine optimierte Traktion für die Beschleunigung des Fahrzeuges vorliegt.

Eine bevorzugte Ausgestaltung betrifft ein Verfahren, das vor einem Fahrantritt und/oder bei einem Fahrbetrieb des Fahrzeuges ausgeführt wird. Hierbei hat die Ausführung des Verfahrens vor dem Fahrantritt des Fahrzeuges den Vorteil, dass beim Anfahren mit dem Fahrzeug bereits eine optimierte Traktion vorliegt. Das Ausführen während des Fahrbetriebes erlaubt eine kontinuierliche Anpassung der Sollmomente beim Fahrbetrieb, so dass zu jedem Zeitpunkt eine optimale Beschleunigung und/oder Verzögerung des Fahrzeuges vorliegt.

Eine vorteilhafte Ausgestaltung betrifft ein Verfahren, das während des Fahrbetriebes des Fahrzeuges wiederholt wird. Hierbei wird das Verfahren in vorteilhafter Weise kontinuierlich wiederholt, sodass eine kontinuierliche Anpassung der ermittelten Sollmomente für die mehreren Antriebsachsen ausgeführt werden kann.

Eine besonders vorteilhafte Ausgestaltung betrifft ein Fahrzeug, insbesondere ein Hybridfahrzeug und noch mehr bevorzugt einen Omnibus. Insbesondere Omnibusse unterliegen starken Schwankungen in der Achslastverteilung, zum Beispiel durch einen ständigen Wechsel der Fahrgastverteilung im Bus. Die voran beschriebenen erfindungsgemäßen Vorteile, insbesondere der minimierte Differenzschlupf zwischen den mehreren Antriebsachsen und ein optimaler Spritverbrauch kommen bei Hybridfahrzeugen, insbesondere bei Omnibussen, besonders stark zur Geltung.

Bevorzugt sieht eine Ausgestaltung vor, dass das Verfahren zusätzlich folgenden Schritt umfasst, nämlich ein Erfassen eines von der ersten und/oder zweiten Antriebsvorrichtung ersten und zweiten maximal ausführbaren Momentes. Bei einer zweckmäßigen Ausgestaltung kann vorgesehen sein, dass das Fahrzeug zusätzlich eine weitere nicht angetriebene Achse aufweist. Bei dieser Ausgestaltungsform umfasst das Fahrzeug mindestens eine weitere Achse. Ohne Einschränkung kann das vorliegende Verfahren aber auch auf Fahrzeuge mit mehr als zwei Antriebsachsen übertragen werden. Jede zusätzliche Antriebsachse ist dann in vergleichbarer Weise ausgestaltet wie die erste und/oder zweite Antriebsachse.

Eine bevorzugte Weiterbildung sieht vor, dass das Gesamtmoment mittels eines Bremswertgebers oder eines Fahrpedals des Fahrzeuges oder durch eine sonstige externe Beschleunigungs- oder Verzögerungsanforderung oder ein manuelles Bedienelement vorgegeben wird.

Ausführungsbeispiele der Erfindung werden nachfolgend anhand der Figuren im Vergleich zum Stand der Technik, welcher zum Teil ebenfalls dargestellt ist, beschrieben. Diese sollen die Ausführungsbeispiele nicht notwendigerweise maßstäblich darstellen, vielmehr sind die Figuren, wo zur Erläuterung dienlich, in schematisierter und/oder leicht verzerrter Form ausgeführt. Im Hinblick auf Ergänzungen der aus den Figuren unmittelbar erkennbaren Lehren wird auf den einschlägigen Stand der Technik verwiesen.

Identische oder ähnliche Teile oder Teile identischer oder ähnlicher Funktion sind, dort wo sinnvoll der Einfachheit halber mit einem gleichen Bezugszeichen versehen. Weitere Vorteile, Merkmale und Einzelheiten der Erfindung ergeben sich aus der nachfolgenden Beschreibung der bevorzugten Ausführungsbeispiele sowie anhand der folgenden Figuren. Im Einzelnen zeigen:

Fig. 1     eine schematische Abbildung eines Fahrzeuges gemäß einer möglichen Ausgestaltungsform der Erfindung,

Fig. 2A     ein schematisches Ablaufdiagramm einer möglichen Ausgestaltungsform des erfindungsgemäßen Verfahrens,

Fig. 2B     ein schematisches Ablaufdiagramm einer bevorzugten, anderen Ausgestaltungsform des erfindungsgemäßen Verfahrens,

Fig. 2C     ein schematisches Ablaufdiagramm eine noch mehr bevorzugten Ausgestaltungsform des erfindungsgemäßen Verfahrens,

Fig. 3     eine schematische Abbildung eines Fahrzeuges und Vorrichtung gemäß einer bevorzugten Ausgestaltungsform der Erfindung, und

Fig. 4     eine Messung verschiedener Messgrößen bei einer möglichen Ausgestaltungsform des erfindungsgemäßen Verfahrens.

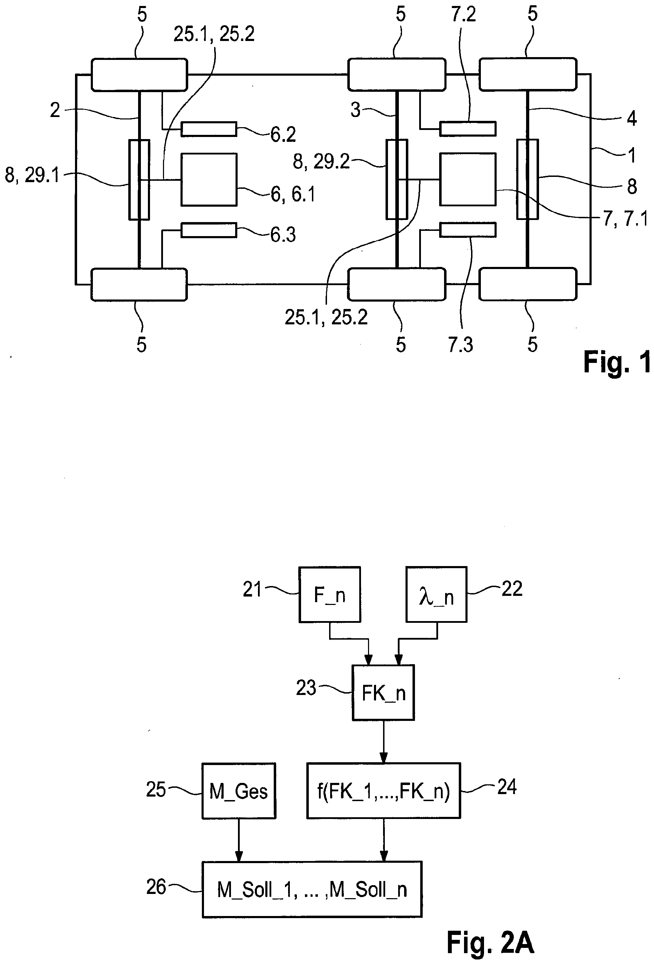

Fig. 1 zeigt eine schematische Abbildung eines Fahrzeuges (von unten) gemäß einer möglichen Ausgestaltungsform der Erfindung. Das dargestellte Fahrzeug 1 umfasst insgesamt drei Achsen, nämlich eine erste und eine zweite Antriebsachse 2, 3, sowie eine nichtangetriebene dritte Achse 4. Ohne Einschränkung kann das mit dieser Anmeldung beanspruchte Verfahren und die Vorrichtung aber auch auf Fahrzeuge übertragen werden, die mehr oder weniger Antriebsachsen und/oder mehr oder weniger nicht angetriebene Achsen umfassen.

Im vorliegend dargestellten Fall sind der ersten und zweiten Antriebsachse 2, 3 jeweils eine Antriebsvorrichtung zugeordnet, insbesondere der ersten Antriebsachse 2 eine erste Antriebsvorrichtung 6 und der zweiten Antriebsachse 3 eine zweite Antriebsvorrichtung 7. Die erste und zweite Antriebsvorrichtung 6, 7 sind bevorzugt als Achsenantriebsvorrichtungen 6.1, 7.1 gebildet (schematisch dargestellt), die jeweils konfiguriert sind, ein (Dreh-)Moment auf die erste und zweite Antriebsachse 2, 3 zu bewirken. Hierbei kann es sich sowohl um ein Beschleunigungs- 25.1 als auch um ein Verzögerungsmoment 25.2 handeln. Bevorzugt sind die erste und zweite Antriebsvorrichtung 6, 7, insbesondere die erste und zweite Achsenantriebsvorrichtung 6.1, 7.1, als ein erster und zweiter Elektromotor gebildet.

In einer anderen bevorzugen Ausgestaltungsform (nicht dargestellt) ist die erste Antriebsvorrichtung 6 in Form von zwei unabhängig voneinander wirkenden Radantriebsvorrichtungen 6.2, 6.3 (schematisch angedeutet) gebildet, die konfiguriert sind, jeweils auf ein entsprechend zugeordnetes Rad der ersten Antriebsachse 2 ein entsprechendes Moment zu bewirken. Auch die zweite Antriebsvorrichtung 7 ist bei dieser Ausgestaltungsform in Form von zwei unabhängigen voneinander wirkenden Antriebsvorrichtungen 7.2, 7.3 gebildet, die konfiguriert sind, jeweils auf die entsprechend zugeordneten Räder 5 der zweiten Antriebsachse 3 ein Moment, insbesondere ein Beschleunigungs- 25.1 und/oder ein Verzögerungsmoment 25.2 zu bewirken. In einer bevorzugten Ausgestaltungsform sind hierbei die ersten und zweiten Radantriebsvorrichtungen 6.1, 6.2, 7.1 und 7.2 als Elektromotoren ausgebildet.

Weiterhin umfasst das Fahrzeug 1 eine Luftfederanlage 8 (nur schematisch angedeutet), die konfiguriert ist, eine Achslastverteilung des Fahrzeuges, insbesondere einen ersten Achslastwert 29.1 für die erste Antriebsachse 2 und einen zweiten Achslastwert 29.2 für die zweite Antriebsachse 3 und einen weiteren Achslastwert für die nicht angetriebene Achse 4, zu ermitteln und an eine Fahrzeugsteuervorrichtung (nicht dargestellt) weiterzuleiten. Bevorzugt handelt es sich bei der Luftfederanlage 8 um eine elektronisch geregelte Luftfederanlage.

Fig. 2A zeigt ein schematisches Verfahrensdiagramm gemäß einer möglichen Ausgestaltungsform des erfindungsgemäßen Verfahrens zum Steuern eines Fahrzeuges 1 mit mehreren, nämlich n Antriebsachsen, bevorzugt aber mit einer ersten und einer zweiten Antriebsachse 2, 3, also n = 2 Antriebsachsen des Fahrzeuges. Das in der Fig. 2A dargestellte Verfahren ist eine mögliche Ausgestaltungsform für ein Verfahren zum Steuern eines Fahrzeuges 1, so wie es beispielsweise in der Fig.1 dargestellt ist, wobei für gleiche Merkmale gleiche Bezugszeichen verwendet werden.

Zunächst werden bei dieser Ausgestaltungsform an den mehreren Antriebsachsen die mehreren Antriebskräfte F_1 bis F_n für die erste bis n-te Antriebsachse des Fahrzeuges 1 erfasst (vgl. Bezugszeichen 21 in der Fig. 2A). Daneben werden für die erste bis n-te Antriebsachse ein erster bis n-ter Schlupf, nämlich λ_1 bis λ_n für die erste bis n-te Antriebsachse erfasst 22, insbesondere ein erster und zweiter Schlupfwert λ_1, λ_2 für die erste und zweite Antriebsachse 2, 3 des Fahrzeuges 1 wie es beispielsweise in der Fig. 1 dargestellt ist. Aus den Werten für die Antriebskräfte F_1 bis F_n und den ersten bis n-ten Schlupfwerten λ_1 bis λ_n kann dann eine entsprechende Schlupfmaßzahl FK_n (für die n-te Antriebsachse) für jede Antriebsachsen, insbesondere aber für die erste und zweite Antriebsachse 2, 3, also eine erste Schlupfmaßzahl FK_1 für die erste Antriebsachse 2 aus dem Wert für die erste Antriebskraft F_1 und dem ersten Schlupfwert λ_1 und eine Schlupfmaßzahl FK_2 für die zweite Antriebsachse 3 aus dem Wert für die zweite Antriebskraft F_2 und dem zweiten Schlupfwert λ_2 ermittelt 23 werden. Die Schlupfmaßzahl ist definiert als die Änderung des Schlupfes $d\lambda$ bezogen auf die Änderung der Antriebskraft $dF$ und kann gemäß der folgenden Formel berechnet werden:

$$FK_n = f\left(\frac{d\lambda\_n}{dF\_n}\right)$$

Aus den ermittelten Schlupfmaßzahlen FK_1 bis FK_n für die erste bis n-te Antriebsachse können dann Verhältnisse beziehungsweise Verhältniswerte VW_1 bis VW_n ermittelt werden 24, bevorzugt zum Beispiel VW_1 = FK_1 / FK_2 und VW_2 = FK_2 / FK_1.

Zusätzlich wird ein Gesamtmoment M_Ges vorgegeben 25, zum Beispiel mittels eines Bremswertgebers 36.1 oder eines Gaspedals 36.2 des Fahrzeuges 1 oder durch eine sonstige externe Beschleunigungs- oder Verzögerungsanforderung 36.3 oder aber eines manuellen Bedienelementes 36.4 im Fahrzeug 1. Das Gesamtmoment M_Ges gibt dabei das Moment an, welches insgesamt auf die Antriebsachsen, insbesondere auf die erste und zweite Antriebsachse 2, 3 wirken soll. Bei dem Gesamtmoment M_Ges kann es sich sowohl um ein Beschleunigungsmoment als auch um ein Verzögerungsmoment handeln. Das Gesamtmoment M_Ges wird dann gemäß dem ermittelten Verhältnis beziehungsweise den Verhältniswerten in mehrere Sollmomente M_Soll_1 bis M_Soll_n für die erste bis n-te Antriebsachse aufgeteilt 26, insbesondere in ein erstes Sollmoment M_Soll_1 und ein zweites Sollmoment M_Soll_2, die dann an die erste und zweite Antriebsachse angelegt werden bzw. auf diese wirken sollen.

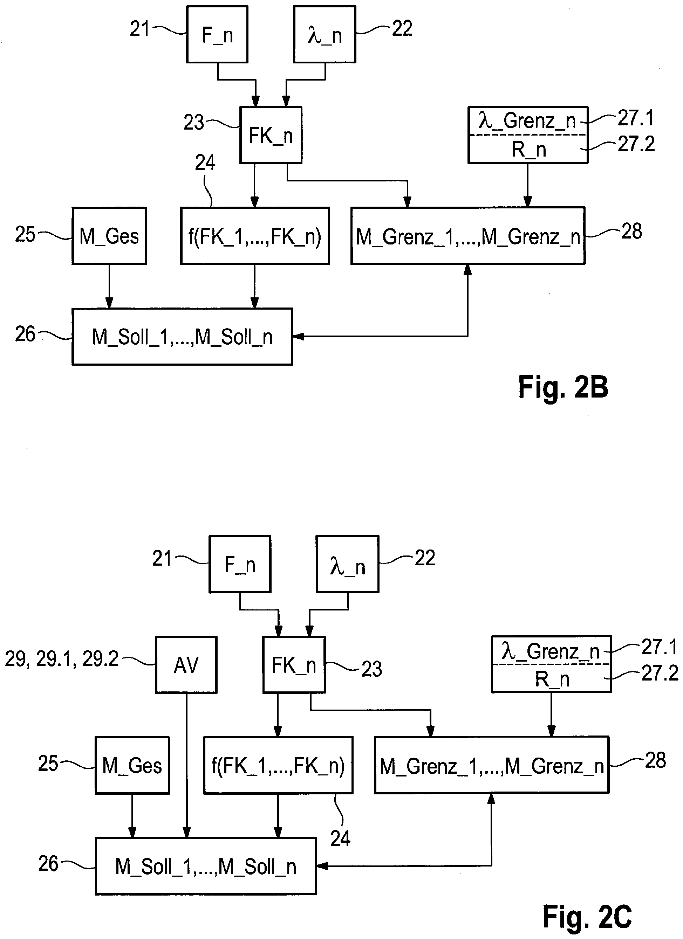

Fig. 2B zeigt ein schematisches Verfahrensdiagramm gemäß einer möglichen Ausgestaltung des erfindungsgemäßen Verfahrens zum Steuern eines Fahrzeuges 1 mit mehreren, nämlich n Antriebsachsen, insbesondere mit einer ersten und einer zweiten Antriebsachse 2, 3, sowie es in der Fig. 1 dargestellt ist. Die in der Fig. 2B dargestellte mögliche Ausgestaltung entspricht dabei im Wesentlich dem Verfahren wie es in der Fig. 2A beschrieben ist, wobei weitere Verfahrensschritte vorgesehen sind.

Bei dem in der Figur 2B dargestellten Verfahren werden zum Einen ein Halbmesser oder Radius R mindestens eines Rades des Fahrzeuges vorgegeben 27.2 und zum Anderen mehrere Grenzschlupfe λ_Grenz_1 bis λ_Grenz_n für die erste bis n-te Antriebsachse 27.1, insbesondere ein Grenzschlupf λ_Grenz_1, λ_Grenz_2 für die erste und zweite Antriebsachse 2, 3. Aus den jeweiligen Werten von Halbmesser oder Radius R und dem Grenzschlupf wird ein Grenzmoment M_Grenz_1 bis M_Grenz_n für die erste bis n-te Antriebsachse ermittelt 28 , insbesondere ein erstes Grenzmoment M_Grenz_1 für die erste Antriebsachse 2 und ein zweites Grenzmoment M_Grenz_2 für die zweite Antriebsachse 3. Das Grenzmoment wird gemäß der folgenden Formel bestimmt:

$$M_{grenz\_n} = F_{grenz\_n} * R$$,

wobei

$$FK_n = \frac{\lambda\_Grenz\_n}{F\_Grenz\_n}$$

Die so ermittelten Grenzmomente M_Grenz_1 bis M_Grenz_n dienen dann als Kontrollwerte beim Ansteuern der jeweiligen Antriebsvorrichtungen für die jeweiligen Antriebsachsen, wobei die Antriebsachsen mit den jeweiligen Sollmomenten derart angesteuert werden, dass die Sollmomente M_Soll_1 bis M_Soll_n immer kleiner als die jeweils zugehörigen ermittelten Grenzmomente M_Grenz_1 bis M_Grenz_n sein sollen, insbesondere aber ist das erste Sollmoment M_Soll_1, das auf die erste Antriebsachse 2 wirkt kleiner als das erste Grenzmoment M_Grenz_1 und das zweite Sollmoment M_Soll_2, das auf die zweite Antriebsachse 3 wirkt kleiner als das zweite Grenzmoment. Hierdurch ist stets gewährleistet, dass ein bestimmter (vorgegebener) Grenzschlupf an einer bestimmten Antriebsachse nicht überschritten wird.

Fig. 2C zeigt ein schematisches Verfahrensdiagramm gemäß einer noch mehr bevorzugten Ausgestaltungsform des Verfahrens, wie es in der Fig. 2A und 2B dargestellt und beschrieben ist, wobei ein zusätzlicher Verfahrensschritt vorgesehen ist, nämlich ein Erfassen 29 einer Achslastverteilung AV des Fahrzeuges 1, insbesondere eines ersten Achslastwertes 29.1 für die erste Antriebsachse und eines zweiten Achslastwertes 29.2 für die zweite Antriebsachse.

Die Achslastverteilung AV des Fahrzeuges 1 kann beispielsweise mittels einer elektronisch geregelten Luftfederanlage erfasst oder ermittelt werden. Aus der Achslastverteilung des Fahrzeuges, insbesondere aus den Achslastwerten für die jeweiligen Antriebsachsen, kann dann - in vorteilhafter Weise vor Fahrtantritt des Fahrzeuges - ein Verhältnis oder Verhältniswerte für die entsprechenden Sollmomente, die an den jeweiligen Antriebsachsen angelegt werden sollen, ermittelt werden, insbesondere für die erste und zweite Antriebsachse 2, 3. Dies hat den Vorteil, dass schon vor Fahrtantritt eine optimierte Momentverteilung vorliegt, so dass bereits beim Anfahren mit dem Fahrzeug eine optimale Traktion vorliegt, sofern der Reibwert zwischen Fahrzeug und Fahrbahn identisch und die Reifenkennlinien der betroffenen Achsen vergleichbar sind.

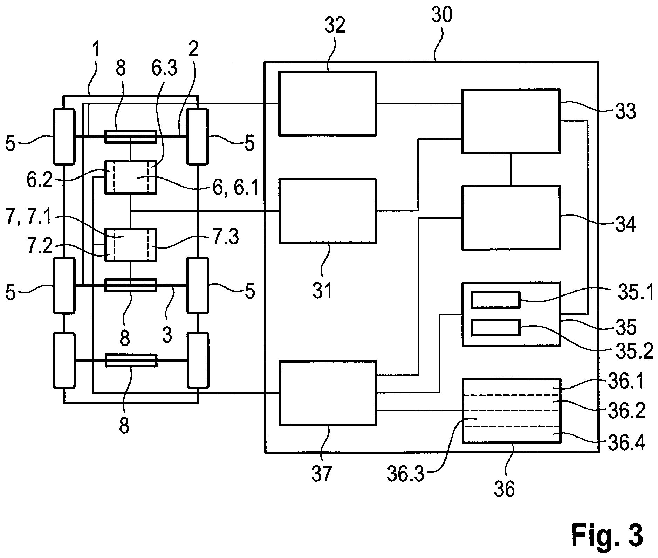

Fig. 3 zeigt eine schematische Abbildung eines Fahrzeuges 1 und eine Vorrichtung 30 zum Steuern des Fahrzeuges 1 gemäß einer vorteilhaften Ausgestaltungsform der Erfindung. Dargestellt ist ein Fahrzeug 1 mit insgesamt drei Achsen, nämlich einer ersten und einer zweiten Antriebsachse 2, 3 sowie einer nicht angetriebenen dritten Achse 4. Vorliegend ist jeder Antriebsachse eine Antriebsvorrichtung zugeordnet, insbesondere der ersten Antriebsachse 2 eine erste Antriebsvorrichtung 6 und der zweiten Antriebsachse 3 eine zweite Antriebsvorrichtung 7. Ohne Einschränkung wird hier auf die Beschreibung zur Fig. 1 verwiesen, wo bereits eine solches Fahrzeug beschrieben ist. Die in der Fig. 3 beschriebene Ausführungsform ist aber in keiner Weise auf dieses Fahrzeug beschränkt, vielmehr kann das Verfahren und die Vorrichtung auch auf Fahrzeuge übertragen werden, die über mehr Antriebsachsen und/oder mehr nicht angetriebene Achsen verfügen.

Weiter ist in der Fig. 3 eine Vorrichtung 30 zum Steuern des Fahrzeuges 1 gezeigt, die in bevorzugter Weise im Fahrzeug 1 integriert ist. Die Vorrichtung 30 umfasst Mittel 31 zum Erfassen einer ersten und zweiten Antriebskraft F_1, F_2 für die erste und zweite Antriebsachse 2, 3 des Fahrzeuges 1 und Mittel 32 zum Erfassen des ersten und zweiten Schlupfwertes λ_1 und λ_2 für die erste und zweite Antriebsachse 2, 3 des Fahrzeuges 1. Aus den jeweils zwei Werten, nämlich Antriebskraft und Schlupfwert für die erste und zweite Antriebsachse 2, 3 wird mit Hilfe eines Auswertmoduls 33 eine erste Schlupfmaßzahl FK_1 für die erste Antriebsachse 2 (aus der ersten Antriebskraft F_1 und dem ersten Schlupfwert λ_1) und eine zweite Schlupfmaßzahl FK_2 für die zweite Antriebsachse 3 (aus der zweiten Antriebskraft F_2 und dem zweiten Schlupfwert λ_2) ermittelt. Darüber hinaus sind Mittel 36 vorgesehen, insbesondere ein Bremswertgeber 36.1 und/oder ein Gaspedal 36.2 eines Fahrzeuges 1 oder durch eine sonstige externe Beschleunigungs- oder Verzögerungsanforderung 36.3 oder eines manuellen Bedienelementes 36.4 (schematisch angedeutet), zum Erfassen oder Vorgeben eines Gesamtmomentes, welches insgesamt auf die erste und zweite Antriebsachse 2, 3 wirken soll. Das vorgegebene Gesamtmoment wird mittels eines Steuermoduls 34 in ein erstes und zweites Sollmoment M_Soll_1, M_Soll_2 in Abhängigkeit von der ersten und zweiten Schlupfmaßzahl FK_1, FK_2 aufgeteilt und an ein Ansteuermodul 37 weitergeleitet, wobei das Ansteuermodul 37 zum Steuern der Antriebsvorrichtungen 6, 7 mit den Antriebsvorrichtungen 6, 7 elektronisch zum Übertragen von Steuersignalen in Verbindung steht.

Weiterhin ist ein Vergleichsmodul 35 vorgesehen, wobei das Vergleichsmodul 35 beispielsweise mit einer ersten und einer zweiten (Unter-)Einheit 35.1 und 35.2 gebildet ist und die erste Einheit 35.1 einen ersten Grenzschlupfwert $\lambda\_Grenz\_1$ und einen zweiten Grenzschlupfwert $\lambda\_Grenz\_2$ vorgibt und die zweite Einheit 35.2 einen Halbmesser R mindestens eines Rades 5 des Fahrzeuges 1. Die Einheiten 35.1 und 35.2 können beispielsweise in Form von Speicher gebildet sein, in denen die jeweiligen Werte gespeichert sind. Aus den jeweiligen Werten für Halbmesser oder Radius R und Grenzschlupf wird ein erstes Grenzmoment $M\_Grenz\_1$ für die erste Antriebsachse 2 und ein zweites Grenzmoment $M\_Grenz\_2$ für die zweite Antriebsachse 3 ermittelt. Das Grenzmoment kann dabei gemäß der Beschreibung zur Fig. 2A bis 2C bestimmt werden. Mit dem Vergleichsmodul 35, welches mit dem Ansteuermodul 37 in Verbindung steht, wird das erste und zweite Sollmoment $M\_Soll\_1$, $M\_Soll\_2$ mit dem ersten und zweiten Grenzmoment verglichen, wobei die Antriebsvorrichtungen 6, 7 so angesteuert werden, dass das erste Sollmoment $M\_Soll\_1$, das auf die erste Antriebsachse 2 und das zweite Sollmoment $M\_Soll\_2$, das auf die zweite Antriebsachse 3 wirkt, nicht größer als das erste Grenzmoment $M\_Grenz\_1$ bzw. das zweite Sollmoment $M\_Soll\_2$ nicht größer als das zweite Grenzmoment $M\_Grenz\_2$ für die jeweils erste oder zweite Antriebsachse 2, 3 ist. Die einzelnen Module der Vorrichtung 30 sind in einer bevorzugten Ausgestaltung der Vorrichtung 30 jeweils als Software-Module eines Softwareprogrammes zum Steuern eines Fahrzeuges gebildet.

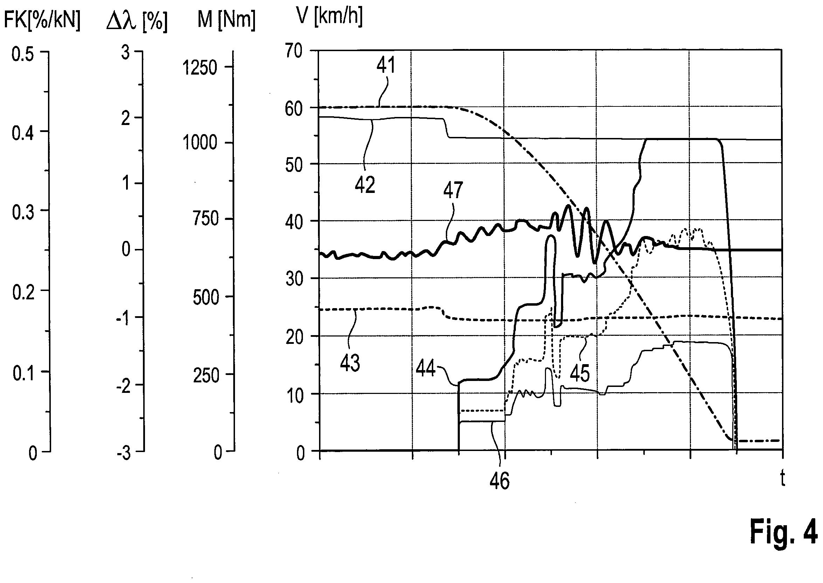

Fig. 4 zeigt eine Messung verschiedener Messgrößen, insbesondere der Schlupfmaßzahl. FK, des Differenzschlupfes $\Delta\lambda$, der Momente $M\_n$ und der Geschwindigkeit v des Fahrzeuges, bei der Durchführung des erfindungsgemäßen Verfahrens gemäß einer möglichen Ausgestaltungsform, insbesondere beim Durchführen eines Bremsmanövers.

In dem dargestellten Mess-Diagramm ist jeweils die Messung der verschiedenen Messgrößen während eines Bremsvorgangs des Fahrzeuges dargestellt, wobei das Fahrzeug im vorliegenden Fall mit mehreren Antriebsachsen gebildet ist, insbesondere mit zwei Antriebsachsen.

Auf der x-Achse ist die Zeit t (während des Bremsmanövers) dargestellt und auf der y-Achse sind die verschiedenen Messgrößen, nämlich die Geschwindigkeit v des Fahrzeuges, das (Brems-)Moment M, der Differenzschlupf $\Delta\lambda$ zwischen erster und zweiter Antriebsachse und die Schlupfmaßzahl FK dargestellt.

Die Geschwindigkeitskurve 41 zeigt das zeitliche Geschwindigkeitsverhalten des Fahrzeugs, das von einer Geschwindigkeit von ca. 60 km/h auf 0 km/h abgebremst wird. Die Gesamtmomentkurve 44 zeigt das zeitliche Verhalten des Gesamtmomentes während des Bremsmanövers, das insgesamt an den beiden Antriebsachsen des Fahrzeuges anzulegen ist oder vorgegeben wird.

Gemäß einer ersten und zweiten Schlupfmaßzahl, insbesondere Schlupfmaßzahlkurve 42 und 43, wird das Gesamtbremsmoment, insbesondere die Gesamtmomentkurve 44 in ein erstes Sollmoment 45 für erste Antriebsachse und ein zweites Sollmoment 46 für die zweite Antriebsachse aufgeteilt und an diese angelegt, wobei die Summe der beiden Sollmomente 45 und 46 zu jedem Zeitpunkt dem Wert der Gesamtmomentkurve 44 entspricht, sofern nicht beide Sollmomente ein jeweiliges Grenzmoment überschreiten.

Die Differenzschlupfkurve 47 zeigt den resultierenden Differenzschlupf des Fahrzeuges zwischen der ersten und zweiten Antriebsachse während des Bremsvorganges an. Es zeigt sich, dass der Differenzschlupf zu jedem Zeitpunkt minimiert ist und nur geringfügig von der Null-Linie abweicht. Hierdurch ist ein optimaler Bremsvorgang bereitgestellt.

Bezugszeichenliste (Bestandteil der Beschreibung)

| | |
|---|---|
| 1 | Fahrzeug |
| 2 | Erste Antriebsachse |
| 3 | Zweite Antriebsachse |
| 4 | Dritte (nicht angetriebene) Achse |
| 5 | Räder |
| 6 | Erste Antriebsvorrichtung |
| 6.1 | Erste Achsenantriebsvorrichtung |
| 6.2, 6.3 | Erste Radantriebsvorrichtung |
| 7 | Zweite Antriebsvorrichtung |
| 7.1 | Zweite Achsenantriebsvorrichtung |
| 7.2, 7.3 | Zweite Radantriebsvorrichtung |
| 8 | Luftfederung |
| 21 | Erfassen einer Antriebskraft |
| 22 | Erfassen eines Schlupfes |
| 23 | Ermitteln einer Schlupfmaßzahl |
| 24 | Verhältniswertbildung |
| 25 | Vorgabe eines Gesamtmomentes |
| 25.1 | Beschleunigungsmoment |
| 25.2 | Verzögerungsmoment |
| 26 | Aufteilen des Gesamtmomentes |
| 27.1 | Vorgabe eines Grenzschlupfes |
| 27.2 | Vorgabe eines Radius |
| 28 | Ermitteln des Grenzmomentes |
| 29 | Vorgabe einer Achslastverteilung |
| 29.1 | Erster Achslastwert |
| 29.2 | Zweiter Achslastwert |
| 30 | Vorrichtung |
| 31 | Mittel zum Erfassen der Kraft |
| 32 | Mittel zum Erfassen der Schlupfwerte |
| 33 | Auswertemodul |
| 34 | Steuermodul |
| 35 | Vergleichsmodul zum Ermitteln der |

| | Grenzmomente |
|---|---|
| 35.1 | Erste Einheit |
| 35.2 | Zweite Einheit |
| 36 | Mittel zum Vorgeben eines Gesamtmomentes |
| 36.1 | Bremswertgeber |
| 36.2 | Fahrpedal |
| 36.3 | externe Beschleunigungs- oder Verzögerungsanforderung |
| 36.4 | manuelles Bedienelement |
| 37 | Ansteuermodul |
| 41 | Geschwindigkeitskurve |
| 42 | Erste Schlupfmaßzahlkurve |
| 43 | Zweite Schlupfmaßzahlkurve |
| 44 | Gesamtmomentkurve |
| 45 | Sollmomentkurve für erste Antriebsachse |
| 46 | Sollmomentkurve für zweite Antriebsachse |
| 47 | Differenzschlupfkurve |
| F_n | Antriebskraft |
| λ | Schlupfwert |
| FK | Schlupfmaßzahl |
| FK_1 | erste Schlupfmaßzahl |
| FK_2 | zweite Schlupfmaßzahl |
| M_Ges | Gesamtmoment |
| M_Soll | Sollmoment |
| M_Soll_1 | erstes Sollmoment |
| M_Soll_2 | zweites Sollmoment |
| M_Grenz | Grenzmoment |
| M_Grenz_1 | erstes Grenzmoment |
| M_Grenz_2 | zweites Grenzmoment |
| AV | Achslastverteilung |
| R | Radius |
| λ_Grenz | Grenzschlupf |
| Δλ | Differenzschlupf |
| v | Geschwindigkeit |
| t | Zeit |

**Patentansprüche**

1. Verfahren zum Steuern eines Fahrzeuges (1) mit mindestens einer ersten und einer zweiten Antriebsachse (2, 3), wobei der ersten Antriebsachse (2) eine erste Antriebsvorrichtung (6) und der zweiten Antriebsachse (3) eine zweite Antriebsvorrichtung (7) zugeordnet ist und beim Betrieb der ersten und zweiten Antriebsvorrichtung (6, 7) ein erster und zweiter Schlupf (λ_1, λ_2), bei einer auf die erste und zweite Antriebsachse (2, 3) wirkenden ersten und zweiten Antriebskraft (F_1, F_2), vorliegen, **dadurch gekennzeichnet, dass** das Verfahren folgende Schritte umfasst:

   - Erfassen (21) der ersten und zweiten Antriebskraft (F_1, F_2) für die erste und zweite Antriebsachse (2, 3) des Fahrzeuges (1);

   - Erfassen (22) des ersten und zweiten Schlupfwertes (A_1, A_2) für die erste und zweite Antriebsachse (2, 3) des Fahrzeuges (1);

   - Ermitteln (23) einer ersten Schlupfmaßzahl (FK_1) für die erste Antriebsachse (2) aus der ersten Antriebskraft (F_1) und dem ersten Schlupfwert (λ_1) und einer zweiten Schlupfmaßzahl (FK_2) für die zweite Antriebsachse (3) aus der zweiten Antriebskraft (F_2) und dem zweiten Schlupfwert (λ_2);

   - Vorgeben (25) eines Gesamtmomentes (M_Ges), das insgesamt auf die erste und zweite Antriebsachse (2, 3) wirken soll; und

   - Aufteilen (26) des Gesamtmomentes (M_Ges) in ein erstes und zweites Sollmoment (M_Soll_1, M_Soll_2) in Abhängigkeit von der ersten und zweiten Schlupfmaßzahl (FK_1, FK_2).

2. Verfahren nach Anspruch 1, **dadurch gekennzeichnet, dass** das Verfahren zusätzlich folgende Schritte umfasst:

   - Ermitteln eines Verhältniswertes (24) aus der ersten und zweiten Schlupfmaßzahl (FK_1, FK_2) für die erste und zweite Antriebsachse (2, 3); und

   - Aufteilen des Gesamtmomentes (25) in das erste und das zweite Sollmoment (M_Soll_1, M_Soll_2) in Abhängigkeit von dem ermittelten Verhältniswert (24).

3. Verfahren nach einem der vorangehenden Ansprüche, **dadurch gekennzeichnet, dass** das Verfahren zusätzlich folgende Schritte umfasst:

   - Vorgeben (27.1) eines ersten und zweiten Grenzschlupfes (λ_Grenz_1, λ_Grenz_2) für die erste und zweite Antriebsachse (2, 3);

   - Vorgeben (27.2) eines Halbmessers (R) mindestens eines Rades (5) des Fahrzeuges (1); und

   - Ermitteln (28) eines ersten Grenzmomentes (M_Grenz_1) für die erste Antriebsachse (2) und eines zweiten Grenzmomentes (M_Grenz_1) für die zweite Antriebsachse (3) mittels der ersten und zweiten Schlupfmaßzahl (FK_1, FK_2), dem ersten und zweiten Grenzschlupf (λ_Grenz_1, λ_Grenz_2) und dem mindestens einen Halbmesser (R) des Rades (5).

4. Verfahren nach einem der vorangehenden Ansprüche, **dadurch gekennzeichnet, dass** das Verfahren zusätzlich folgenden Schritt umfasst:

   - Ansteuern der ersten und zweiten Antriebsvorrichtung (6, 7), so dass das erste Sollmoment (M_Soll_1) auf die erste Antriebsachse (2) und das zweite Sollmoment (M_Soll_2) auf die zweite Antriebsachse (3) wirkt, wobei das erste Sollmoment (M_Soll_1) nicht größer als das erste Grenzmoment (M_Grenz_1) und das zweite Sollmoment (M_Soll_2) nicht größer als das zweite Grenzmoment (M_Grenz_2) für die jeweils erste oder zweite Antriebsachse (2, 3) ist.

5. Verfahren nach einem der vorangehenden Ansprüche, **dadurch gekennzeichnet, dass** die erste Antriebsvorrichtung (6) als eine auf die erste Achse (2) wirkende erste Achsenantriebsvorrichtung (6.1) oder als zwei erste unabhängig voneinander auf die Räder (5) der ersten Achse (2) wirkende Radantriebsvorrichtungen (6.2, 6.3) und die zweite Antriebsvorrichtung (7) als eine auf die zweite Achse (3) wirkende zweite Achsenantriebsvorrichtung (7.1) oder als zwei zweite unabhängig voneinander auf die Räder (5) der zweiten Achse (3) wirkende Radantriebsvorrichtungen (7.2, 7.3) gebildet sind.

6. Verfahren nach Anspruch 5, **dadurch gekennzeichnet, dass** die erste und/oder zweite Achsenantriebsvorrichtung (6.1, 7.1) und/oder die ersten oder zweiten Radantriebsvorrichtungen (6.2, 6.3, 7.2, 7.3) als ein erster und/oder zweiter Elektromotor gebildet sind.

7. Verfahren nach einem der vorherigen Ansprüche, **dadurch gekennzeichnet, dass** die erste und/oder zweite Antriebsvorrichtung (6, 7) sowohl-Beschleunigungsmomente (25.1) als auch Verzögerungsmomente (25.2) auf die erste und/oder zweite Antriebsachse (2, 3) bewirken.

8. Verfahren nach einem der vorangehenden Ansprüche, **dadurch gekennzeichnet, dass** das Fahrzeug (1) vorzugsweise eine elektronisch geregelte Luftfederung (8) zur Erfassung einer Achslastverteilung (AV), insbesondere eines ersten und zweiten Achslastwertes (29.1, 29.2) für die erste und zweite Antriebsachse (2, 3) aufweist.

9. Verfahren nach einem der vorangehenden Ansprüche, **dadurch gekennzeichnet, dass** das Verfahren vor einem Fahrantritt und / oder bei einem Fahrbetrieb des Fahrzeuges (1) ausgeführt wird.

10. Verfahren nach einem der vorangehenden Ansprüche, **dadurch gekennzeichnet, dass** das Verfahren während des Fahrbetriebes des Fahrzeuges (1) wiederholt wird.

11. Verfahren nach einem der vorangehenden Ansprüche, **dadurch gekennzeichnet, dass** das Fahrzeug (1) ein Hybridfahrzeug oder vollelektrisches Fahrzeug, insbesondere ein Omnibus, ist.

12. Verfahren nach einem der vorangehenden Ansprüche, **dadurch gekennzeichnet, dass** das Verfahren zusätzlich folgenden Schritt umfasst:

   - Erfassen eines von der ersten und zweiten Antriebsvorrichtung (6, 7) ersten und zweiten maximal ausführbaren Momentes (M_max_1, M_max_2).

13. Verfahren nach einem der vorangehenden Ansprüche, **dadurch gekennzeichnet, dass** das Fahrzeug (1) zusätzlich eine oder mehrere weitere nicht angetriebene Achse(n) (4) aufweisen kann.

14. Verfahren nach einem der vorangehenden Ansprüche, **dadurch gekennzeichnet, dass** das Gesamtmoment (M_Ges) mittels eines Bremswertgebers (36.1) oder eines Fahrpedals (36.2) des Fahrzeuges (1) oder einer sonstigen externen Beschleunigungs- oder Verzögerungsanforderung (36.3) oder eines manuellen Bedienelements (36.4) vorgegeben wird.

15. Vorrichtung (30) zum Steuern eines Fahrzeuges (1), insbesondere ausgebildet das Verfahren nach einem der Ansprüche 1 bis 14 auszuführen, mit mindestens einer ersten und einer zweiten Antriebsachse (2, 3), wobei der ersten Antriebsachse (2) eine erste Antriebsvorrichtung (6) und der zweiten Antriebsachse (3) eine zweite Antriebsvorrichtung (7) zugeordnet ist und beim Betrieb der ersten und zweiten Antriebsvorrichtung (6, 7) ein erster und zweiter Schlupf ($\lambda\_1$, $\lambda\_2$), bei einer auf die erste und zweite Antriebsachse (2, 3) wirkenden ersten und zweiten Antriebskraft (F_1, F_2), vorliegen, **dadurch gekennzeichnet, dass** die Vorrichtung folgende Merkmal aufweist:

   - Mittel (31) zum Erfassen der ersten und zweiten Antriebskraft (F_1, F_2) für die erste und zweite Antriebsachse (2, 3) des Fahrzeuges (1);
   - Mittel (32) zum Erfassen des ersten und zweiten Schlupfwertes ($\lambda\_1$, $\lambda\_2$) für die erste und zweite Antriebsachse (2, 3) des Fahrzeuges (1);
   - Auswertemodul (33) zum Ermitteln einer ersten Schlupfmaßzahl (FK_1) für die erste Antriebsachse (2) aus der ersten Antriebskraft (F_1) und dem ersten Schlupfwert ($\lambda\_1$) und einer zweiten Schlupfmaßzahl (FK_2) für die zweite Antriebsachse (3) aus der zweiten Antriebskraft (F_2) und dem zweiten Schlupfwert ($\lambda\_2$);
   - Mittel (36) zum Vorgeben (25) eines Gesamtmomentes (M_Ges), das insgesamt auf die erste und zweite Antriebsachse (2, 3) wirken soll; und
   - Steuermodul (34) zum Aufteilen (26) des Gesamtmomentes (M_Ges) in ein erstes und zweites Sollmoment (M_Soll_1, M_Soll_2) in Abhängigkeit von der ersten und zweiten Schlupfmaßzahl (FK_1, FK_2).

**16.** Fahrzeug enthaltend eine Vorrichtung (30) zum Steuern eines Fahrzeuges (1) nach Anspruch 15.

## Claims

**1.** Method for controlling a vehicle (1) having at least a first and a second drive axle (2, 3), wherein the first drive axle (2) is allocated a first drive device (6) and the second drive axle (3) is allocated a second drive device (7) and when operating the first and second drive device (6, 7), a first and second slip ($\lambda$_1, $\lambda$_2) are present, in the case of a first and a second drive force (F_1, F_2) that act upon the first and the second drive axle (2, 3), **characterized in that** the method comprises the following steps:

- Ascertaining (21) the first and the second drive force (F_1, F_2) for the first and the second drive axle (2, 3) of the vehicle (1);
- Ascertaining (22) the first and second slip value ($\lambda$_1, $\lambda$_2) for the first and second drive axle (2, 3) of the vehicle (1);
- Determining (23) a first slip measured value (FK_1) for the first drive axle (2) from the first drive force (F_1) and the first slip value ($\lambda$_1) and determining a second slip measured value (FK_2) for the second drive axle (3) from the second drive force (F_2) and the second slip value ($\lambda$_2);
- Predetermining (25) a total torque (M_Ges) that is to act altogether on the first and second drive axle (2, 3); and
- Dividing (26) the total torque (M_Ges) into a first and second desired torque (M_Soll_1, M_Soll_2) in dependence upon the first and the second slip measured value (FK_1, FK_2).

**2.** Method according to Claim 1, **characterized in that** the method additionally comprises the following steps:

- Determining a ratio value (24) from the first and second slip measured value (FK_1, FK_2) for the first and second drive axle (2, 3); and
- Dividing the total torque (25) into the first and the second desired torque (M_Soll_1, M_Soll_2) in dependence upon the determined ratio value (24).

**3.** Method according to any one of the preceding claims, **characterized in that** the method additionally comprises the following steps:

- Predetermining (27.1) a first and second slip

threshold value ($\lambda$_Grenz_1, $\lambda$_Grenz_2) for the first and second drive axle (2, 3),
- Predetermining (27.2) a radius (R) of at least one wheel (5) of the vehicle (1), and
- Determining (28) a first torque threshold (M_Grenz_1) for the first drive axle (2) and a second torque threshold (M_Grenz_1) for the second drive axle (3) by means of the first and second slip measured value (FK_1, FK_2), the first and the second slip threshold ($\lambda$_Grenz_1, $\lambda$_Grenz_2) and the at least one radius (R) of the wheel (5).

**4.** Method according to any one of the preceding claims, **characterized in that** the method additionally comprises the following steps:

- Controlling the first and second drive device (6, 7) so that the first desired torque (M_Soll_1) acts upon the first drive axle (2) and the second desired torque (M_Soll_2) acts upon the second drive axle (3), wherein the first desired torque (M_Soll_1) is not greater than the first torque threshold (M_Grenz_1) and the second desired torque (M_Soll_2) is not greater than the second torque threshold (M_Grenz_2) for the in each case first or second drive axle (2, 3).

**5.** Method according to any one of the preceding claims, **characterized in that** the first drive device (6) is embodied as a first axle drive device (6.1) that acts upon the first axle (2) or as two first wheel drive devices (6.2, 6.3) that act independently of one another on the wheels (5) of the first axle (2) and the second drive device (7) is embodied as a second axle drive device (7.1) that acts upon the second axle (3) or as two second wheel drive devices (7.2, 7.3) that act independently of one another on the wheels (5) of the second axle (3).

**6.** Method according to Claim 5, **characterized in that** the first and/or second axle drive device (6.1, 7.1) and/or the first or second wheel drive devices (6.2, 6.3, 7.2, 7.3) are embodied as a first and/or second electric motor.

**7.** Method according to any one of the preceding claims, **characterized in that** the first and/or second drive device (6, 7) effect both acceleration torques (25.1) as well as deceleration torques (25.2) on the first and/or second drive axle (2, 3).

**8.** Method according to any one of the preceding claims, **characterized in that** the vehicle (1) preferably comprises an electronically regulated air suspension (8) for ascertaining an axle load distribution (AV), in particular of a first and second axle load value (29.1, 29.2) for the first and second drive axle (2, 3).

9. Method according to any one of the preceding claims, **characterized in that** the method is implemented prior to commencing travel and/or during the driving operation of the vehicle (1).

10. Method according to any one of the preceding claims, **characterized in that** the method is repeated during the driving operation of the vehicle (1).

11. Method according to any one of the preceding claims, **characterized in that** the vehicle (1) is a hybrid vehicle or fully electric vehicle, in particular an omnibus.

12. Method according to any one of the preceding claims, **characterized in that** the method additionally comprises the following step:

   - Ascertaining a first and a second maximum torque (M_max_1, M_max_2) that can be implemented by the first and the second drive device (6, 7).

13. Method according to any one of the preceding claims, **characterized in that** the vehicle (1) can additionally comprise one or multiple further nondriven axle(s) (4).

14. Method according to any one of the preceding claims, **characterized in that** the total torque (M_Ges) is predetermined by means of a braking value encoder (36.1) or a gas pedal (36.2) of the vehicle (1) or any other external demand for acceleration or deceleration (36.3) or a manual operating element (36.4).

15. Device (30) for controlling a vehicle (1), said device being embodied in particular to implement the method according to any one of Claims 1 to 14, having at least a first and a second drive axle (2, 3), wherein the first drive axle (2) is allocated a first drive device (6) and a second drive axle (3) is allocated a second drive device (7) and when operating the first and second drive device (6, 7), a first and second slip (λ_1, λ_2) are present in the case of a first and a second drive force (F_1, F_2) that act upon the first and second drive axle (2, 3), **characterized in that** the device comprises the following features:

   - Means (31) for ascertaining the first and the second drive force (F_1, F_2) for the first and second drive axle (2, 3) of the vehicle (1);
   - Means (32) for ascertaining the first and second slip value (λ_1, λ_2) for the first and second drive axle (2, 3) of the vehicle (1);
   - An evaluating module (33) for determining a first slip measured value (FK_1) for the first drive axle (2) from the first drive force (F_1) and the first slip value (λ_1) and determining a second slip measured value (FK_2) for the second drive axle (3) from the second drive force (F_2) and the second slip value (λ_2);
   - Means (36) for predetermining (25) a total torque (M_Ges) that is to act altogether on the first and second drive axle (2, 3); and
   - A control module (34) for dividing (26) the total torque (M_Ges) into a first and second desired torque (M_Soll_1, M_Soll_2) in dependence upon the first and second slip measured value (FK_1, FK_2).

16. Vehicle including a device (30) for controlling a vehicle (1) according to Claim 15.

## Revendications

1. Procédé de commande d'un véhicule (1) comprenant au moins un premier et un deuxième essieu moteur (2, 3), un premier dispositif d'entraînement (6) étant associé au premier essieu moteur (2) et un deuxième dispositif d'entraînement (7) au deuxième essieu moteur (3) et, lors du fonctionnement des premier et deuxième dispositifs d'entraînement (6, 7), un premier et un deuxième patinage (λ_1, λ_2) étant présents dans le cas d'une première et d'une deuxième force motrice (F_1, F_2) agissant sur le premier et le deuxième essieu moteur (2, 3), **caractérisé en ce que** le procédé comprend les étapes suivantes :

   - détection (21) de la première et de la deuxième force motrice (F_1, F_2) pour le premier et le deuxième essieu moteur (2, 3) du véhicule (1) ;
   - détection (22) de la première et de la deuxième valeur de patinage (λ_1, λ_2) pour le premier et le deuxième essieu moteur (2, 3) du véhicule (1) ;
   - détermination (23) d'un premier indice de patinage (FK_1) pour le premier essieu moteur (2) à partir de la première force d'entraînement (F_1) et de la première valeur de patinage (λ_1) et d'un deuxième indice de patinage (FK_2) pour le deuxième essieu moteur (3) à partir de la deuxième force d'entraînement (F_2) et de la deuxième valeur de patinage (λ_2) ;
   - prédéfinition (25) d'un couple total (M_Ges) qui doit agir globalement sur le premier et le deuxième essieu moteur (2, 3) ; et
   - partage (26) du couple total (M_Ges) en un premier et un deuxième couple de consigne (M_Soll_1, M_Soll_2) en fonction du premier et du deuxième indice de patinage (FK_1, FK_2).

2. Procédé selon la revendication 1, **caractérisé en ce**

**que** le procédé comprend en plus les étapes suivantes :

- détermination d'une valeur de rapport (24) à partir du premier et du deuxième indice de patinage (FK_1, FK_2) pour le premier et le deuxième essieu moteur (2, 3) ; et
- partage du couple total (25) en le premier et le deuxième couple de consigne (M_Soll_1, M_Soll_2) en fonction de la valeur de rapport (24) déterminée.

3. Procédé selon l'une des revendications précédentes, **caractérisé en ce que** le procédé comprend en plus les étapes suivantes :

- prédéfinition (27.1) d'un premier et d'un deuxième patinage limite (λ_Grenz_1, λ_Grenz_2) pour le premier et le deuxième essieu moteur (2, 3) ;
- prédéfinition (27.2) d'un rayon (R) d'au moins une roue (5) du véhicule (1) ; et
- détermination (28) d'un premier couple limite (M_Grenz_1) pour le premier essieu moteur (2) et d'un deuxième couple limite (M_Grenz_1) pour le deuxième essieu moteur (3) au moyen du premier et du deuxième indice de patinage (FK_1, FK_2), du premier et du deuxième patinage limite (λ_Grenz_1, λ_Grenz_2) et de l'au moins un rayon (R) de la roue (5).

4. Procédé selon l'une des revendications précédentes, **caractérisé en ce que** le procédé comprend en plus les étapes suivantes :

- commande du premier et du deuxième dispositif d'entraînement (6, 7) de telle sorte que le premier couple de consigne (M_Soll_1) agisse sur le premier essieu moteur (2) et le deuxième couple de consigne (M_Soll_2) sur le deuxième essieu moteur (3), le premier couple de consigne (M_Soll_1) n'étant pas supérieur au premier couple limite (M_Grenz_1) et le deuxième couple de consigne (M_Soll_2) n'étant pas supérieur au deuxième couple limite (M_Grenz_2) pour le premier ou le deuxième essieu moteur (2, 3) respectif.

5. Procédé selon l'une des revendications précédentes, **caractérisé en ce que** le premier dispositif d'entraînement (6) est réalisé sous la forme d'un premier dispositif d'entraînement d'essieu (6.1) qui agit sur le premier essieu (2) ou sous la forme de deux premiers dispositifs d'entraînement de roue (6.2, 6.3) qui agissent indépendamment l'un de l'autre sur les roues (5) du premier essieu (2), et le deuxième dispositif d'entraînement (7) sous la forme d'un deuxième dispositif d'entraînement d'essieu (7.1) qui agit sur le deuxième essieu (3) ou sous la forme de deux deuxièmes dispositifs d'entraînement de roue (7.2, 7.3) qui agissent indépendamment l'un de l'autre sur les roues (5) du deuxième essieu (3).

6. Procédé selon la revendication 5, **caractérisé en ce que** le premier et/ou le deuxième dispositif d'entraînement d'essieu (6.1, 7.1) et/ou les premiers ou les deuxièmes dispositifs d'entraînement de roue (6.2, 6.3, 7.2, 7.3) sont réalisés sous la forme d'un premier et/ou d'un deuxième moteur électrique.

7. Procédé selon l'une des revendications précédentes, **caractérisé en ce que** le premier et/ou le deuxième dispositif d'entraînement (6, 7) produisent à la fois des couples d'accélération (25.1) et des couples de ralentissement (25.2) sur le premier et/ou le deuxième essieu moteur (2, 3).

8. Procédé selon l'une des revendications précédentes, **caractérisé en ce que** le véhicule (1) possède de préférence une suspension pneumatique (8) à régulation électronique destinée à détecter une distribution des charges d'essieu (AV), notamment une première et une deuxième valeur de charge d'essieu (29.1, 29.2) pour le premier et le deuxième essieu moteur (2, 3).

9. Procédé selon l'une des revendications précédentes, **caractérisé en ce que** le procédé est mis en oeuvre avant le début d'un déplacement et/ou lors d'un régime de déplacement du véhicule (1).

10. Procédé selon l'une des revendications précédentes, **caractérisé en ce que** le procédé est répété pendant le régime de déplacement du véhicule (1).

11. Procédé selon l'une des revendications précédentes, **caractérisé en ce que** le véhicule (1) est un véhicule hybride ou un véhicule entièrement électrique, notamment un autobus.

12. Procédé selon l'une des revendications précédentes, **caractérisé en ce que** le procédé comprend en plus l'étape suivante :

- détection d'un premier et d'un deuxième couple maximal (M_max_1, M_max_2) exécutable par le premier et le deuxième dispositif d'entraînement (6,7).

13. Procédé selon l'une des revendications précédentes, **caractérisé en ce que** le véhicule (1) peut posséder en plus un ou plusieurs essieux (4) non moteurs.

14. Procédé selon l'une des revendications précédentes, **caractérisé en ce que** le couple total (M_Ges) est prédéfini au moyen d'un transmetteur de valeur de freinage (36.1) ou d'une pédale d'accélérateur (36.2) du véhicule (1) ou d'un autre ordre externe d'accélération ou de ralentissement (36.3) ou d'un élément de commande manuel (36.4).

15. Dispositif (30) pour commander un véhicule (1), notamment configuré pour mettre en oeuvre le procédé selon l'une des revendications 1 à 14, comprenant au moins un premier et un deuxième essieu moteur (2, 3), un premier dispositif d'entraînement (6) étant associé au premier essieu moteur (2) et un deuxième dispositif d'entraînement (7) au deuxième essieu moteur (3) et, lors du fonctionnement des premier et deuxième dispositifs d'entraînement (6, 7), un premier et un deuxième patinage ($\lambda$_1, $\lambda$_2) étant présents dans le cas d'une première et d'une deuxième force motrice (F_1, F_2) agissant sur le premier et le deuxième essieu moteur (2, 3), **caractérisé en ce que** le dispositif présente les caractéristiques suivantes :

   - des moyens (31) servant à détecter la première et la deuxième force motrice (F_1, F_2) pour le premier et le deuxième essieu moteur (2, 3) du véhicule (1) ;
   - des moyens (32) servant à détecter la première et la deuxième valeur de patinage ($\lambda$_1, $\lambda$_2) pour le premier et le deuxième essieu moteur (2, 3) du véhicule (1) ;
   - un module d'interprétation (33) servant à déterminer un premier indice de patinage (FK_1) pour le premier essieu moteur (2) à partir de la première force d'entraînement (F_1) et de la première valeur de patinage ($\lambda$_1) et un deuxième indice de patinage (FK_2) pour le deuxième essieu moteur (3) à partir de la deuxième force d'entraînement (F_2) et de la deuxième valeur de patinage ($\lambda$_2) ;
   - des moyens (36) servant à prédéfinir (25) un couple total (M_Ges) qui doit agir globalement sur le premier et le deuxième essieu moteur (2, 3) ; et
   - un module de commande (34) servant à partager (26) le couple total (M_Ges) en un premier et un deuxième couple de consigne (M_Soll_1, M_Soll_2) en fonction du premier et du deuxième indice de patinage (FK_1, FK_2).

16. Véhicule contenant un dispositif (30) pour commander un véhicule (1) selon la revendication 15.

**Fig. 1**

**Fig. 2A**

Fig. 2B

Fig. 2C

Fig. 3

Fig. 4

V [km/h]

M [Nm]

Δλ [%]

FK[%/kN]

41 42 43 44 45 46 47

t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011001994 A1
- DE 10049567 A1
- DE 10049514 B4
- DE 19602170 A1
- EP 2432670 B1
- US 20140018987 A
- US 201303130033 A
- DE 102010036859 A1